# EUROPEAN PATENT APPLICATION

(11) **EP 1 004 466 A1**
(43) Date of publication of application: **31.05.2000**
(21) Application number: 99203967.7
(22) Date of filing: 25.11.1999
(51) Int. Cl.: B60J 7/05

(54) **An open roof construction for a vehicle**

(30) Priority: 27.11.1998 NL 1010671
(71) Applicant: Inalfa Industries B.V., 5804 AB Venray (NL)
(72) Inventor: Boersma, Egbert, 5708 CR Helmond (NL)
(74) Representative: Metman, Karel Johannes

(57) **Abstract**

An open roof construction for a vehicle having an opening (2) in its fixed roof (1) comprises a stationary part (3) to be secured to the roof, an adjustable closing element (4) supported by said stationary part, which can be adjusted between a closed position, in which it closes the roof opening, and an open position, in which it releases the roof opening, wherein the panel is connected to a supporting part (10) via at least one pivot pin (13). The closing element (4) is mounted on the pivot pin (13) with at least some lateral play, and a spring member (17) is disposed round said pivot pin for biassing the closing element to a predetermined position with respect to the supporting part (10).

## Description

The invention relates to an open roof construction in accordance with the preamble of claim 1.

Manufacturing tolerances inevitably occur in the production of parts of an open roof construction. This may lead to rattling of certain joints, whilst on the other hand moving parts may jam, as a result of which they will move with difficulty. These two phenomenons must be avoided, in particular in the suspension of the closing element of the open roof construction, since it must be possible to move this closing element smoothly whilst on the other hand the closing element must not develop a rattle in spite of the large forces which are exerted thereon from outside.

DE-C-197 35 182 discloses a tilting device for a slat roof. The device includes a spiral spring, one end of which being fixed in the pivot pin, and the other end of which being hooked around a protrusion of the supporting part. The spiral spring is intended for tensioning the pivot pin both in rotational and in axial direction.

The object of the invention is to provide a novel open roof construction.

In order to accomplish that objective, the open roof construction according to the invention has the features of at least one of the claims.

Due to said play, in particular play in lateral direction, manufacturing tolerances in that direction can be accommodated without any problem, whilst the spring member ensures that this will not lead to rattling because of the bias on the closing element. In many cases this spring load in a direction parallel to the pivot pin will also prevent rattling of the closing element in the case of the occurrence of play in a direction perpendicularly to the pivot pin.

In case of possible angular displacement between the pivot pin and the closing element due to manufacturing tolerances, it will be very advantageous if the pivot pin is barrel-shaped, at least in the central portion, since this makes it easier to absorb angular displacement, whilst the spring member in turn will prevent rattling. It is noted that the use of a barrel-shaped pin is known per se from EP-B-0 218 890, but a guide pin of a link slot is concerned in said document, whilst there is no play and no pin to prevent rattling.

The invention will now be explained in more detail with reference to the drawings, which schematically illustrate an exemplary embodiment of the invention.
Fig. 1 is a schematic top plan view of a vehicle roof fitted with an open roof construction according to the invention.
Fig. 2 is an enlarged sectional view along line II-II in Fig. 1.
Fig. 3 is a perspective exploded view of the mechanism of the open roof construction of Fig. 1.
Fig. 4 is a flattened view and Fig. 5 is a perspective view of the spring element of the open roof construction of Figs. 1 and 2.

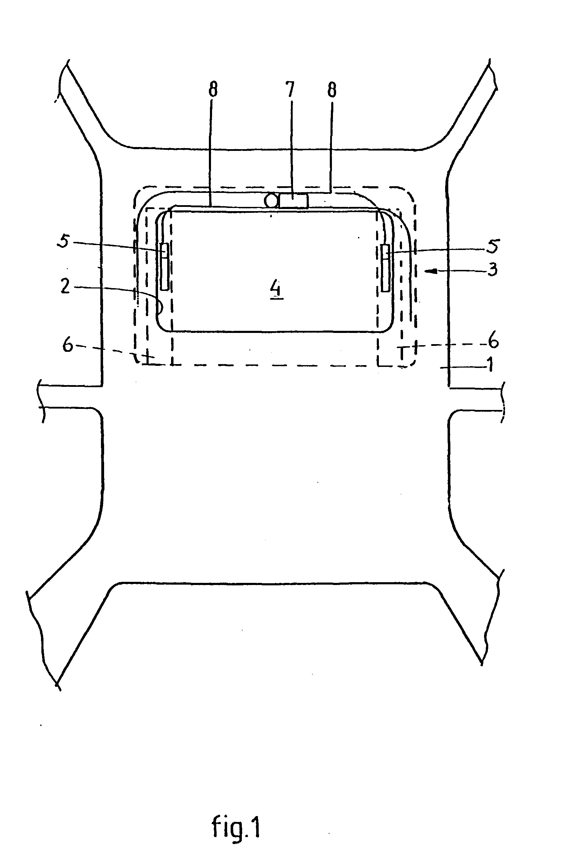

The drawing, and in the first instance Fig. 1 thereof, shows the fixed roof 1 of a motor vehicle, such as a passenger car, which is provided with a roof opening 2 for accommodating an open roof construction. The open roof construction comprises a frame 3 or similar stationary means to be fixed to the vehicle for movably supporting a closing element 4. In the illustrated embodiment, the open roof construction is in the form of a spoiler roof, sliding roof or tilting-sliding roof, which is provided with, in this embodiment, a more or less rigid, preferably transparent panel 4 forming the closing element, which is capable of selectively opening roof opening 2 or releasing it to a greater or lesser extent. To this end, panel 4 is laterally supported by mechanisms 5, which are slidably accommodated in guide rails 6, which are mounted on frame 3 or form part thereof, and which extend in longitudinal direction on either side of the roof opening 2, and possibly rearwards thereof, parallel to each other. Said moving mechanisms 5 can be moved synchronously in guide rails 6, thus moving the panel not only in longitudinal direction but also in vertical direction. To this end, the mechanisms 5 are operated from a driving device 7, such as an electric motor, for example via pull-push cables 8.

For its support, panel 4 is provided on its two sides with supporting sections 9 extending in the longitudinal direction, which supporting sections are attached to the panel, for example by means of an encapsulating technique or other manner. Each supporting section 9 co-acts with the associated mechanism 5. Said section 9 is also utilized for supporting the front side of the panel 4. At that location, section 9 is pivotally supported by a front sliding shoe 10 or the like as a supporting part, which sliding shoe is likewise guided in the associated guide rail 6.

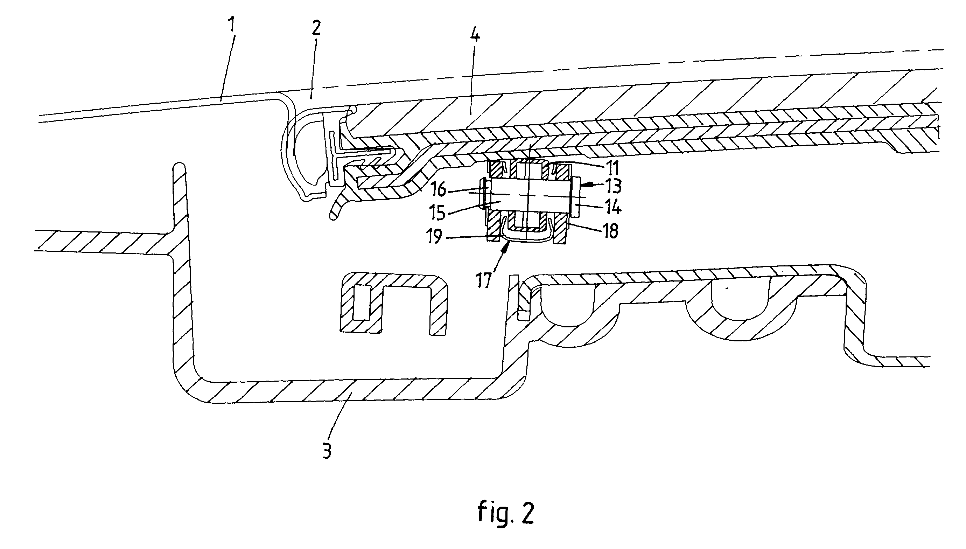

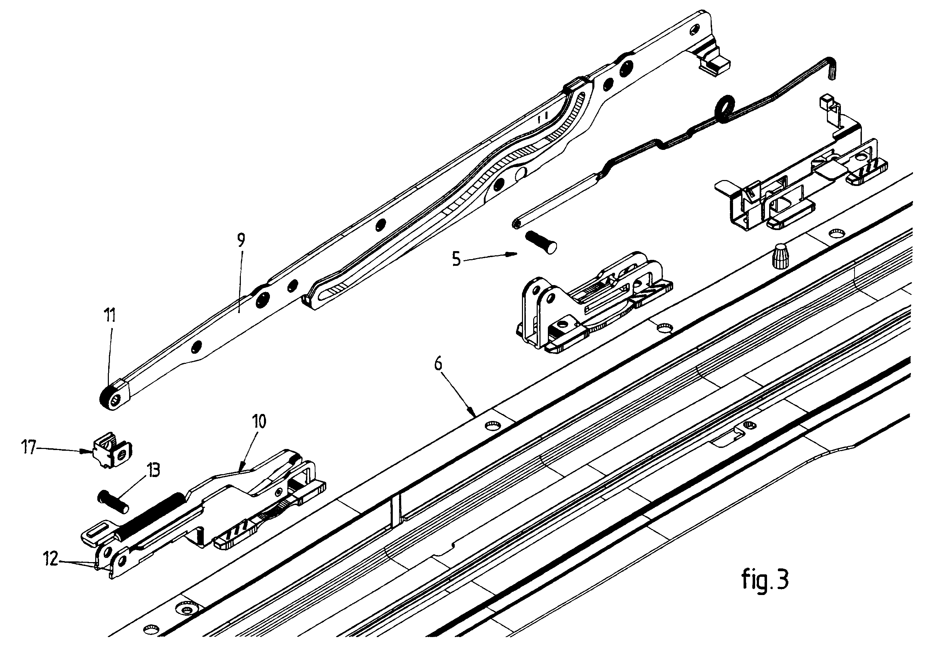

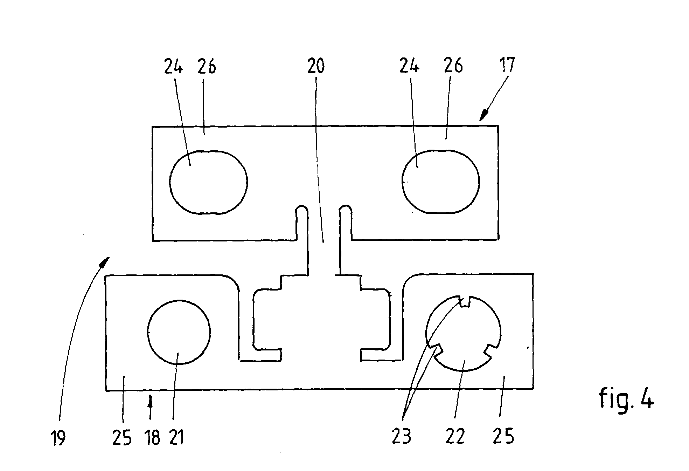

Figs. 2 and 3 show the support of the front side of panel 4 and the mechanism 5 in more detail. The figures show the supporting section 9 provided with a strengthening metal envelope 11, as well as two walls 12 of the sliding shoe on either side of the supporting section 9. The pivoted joint is made up of a pivot pin 13, which is provided with a head 14 at one end, which is barrel-shaped in the central portion and which is provided with a locking groove 16 at the other end. Pivot pin 13 is passed through holes in walls 12 and supporting section 9. Supporting section 9 is accommodated between the walls 12 of sliding shoe 10 with some play, and a spring member 17, which is shown in more detail in Figs. 3 and 4, is provided in order to prevent rattling.

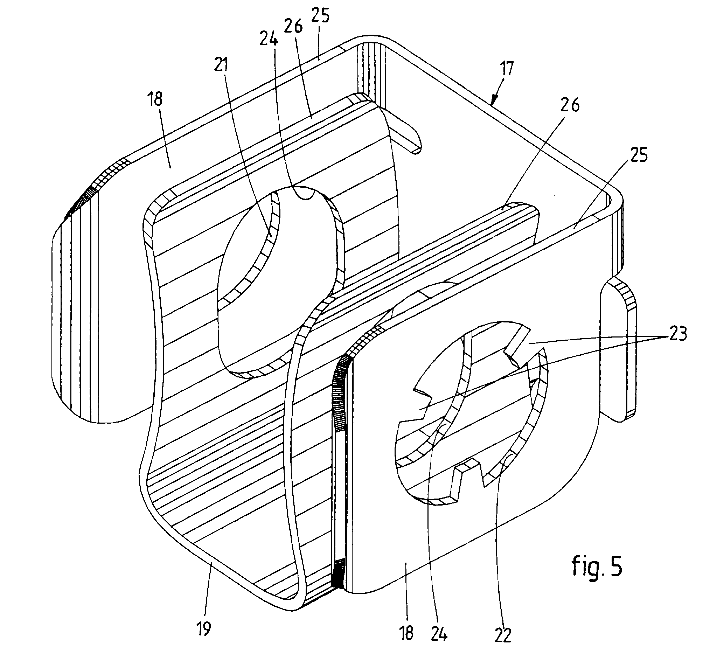

Figs. 4 and 5 show the spring member 17, wherein Fig. 4 shows the flat blank as it has been cut from sheet metal. Spring member 17 comprises a mounting part 18 and a spring clip 19, which are interconnected by a connecting part 20. Fig. 5 shows the spring member 17 in the operating position. Holes present in the mounting part 18 and in the spring clip 19 of spring member 17, viz. a hole 21 in mounting part 18 for supporting the pivot pin 13 near the head 14 thereof, a hole 22 in mounting part 13 near the head 14 thereof, a hole 22 in the mounting part 18 with circumferentially distributed, radial lips 23 for engagement in the locking groove 16 of pivot pin 13, and two holes 24 in the spring clip 19 for loosely passing pivot pin 13, are aligned in this position. The limbs 25 of the U-shaped mounting part 13 that has been formed after bending fit outwardly round the walls 12 of sliding shoe 10, and mounting part 18 is fixed to the sliding shoe 10 by inserting pivot pin 13 and locking it in position.

As is furthermore shown in Fig. 5, the legs 26 of spring clip 19 are bent concavely, in such a manner that supporting section 9 is clampingly accommodated between legs 26 and supporting section 9 is thus biassed to a predetermined central position. As a result, lateral play of the supporting section 9 will not lead to rattling thereof. Play in a direction perpendicularly to the pivot pin 13 will not lead to rattling, either, due to the friction between the legs 26 of spring clip 19 and supporting section 9. Angular divergence between supporting section 9 and pivot pin 13 can be absorbed by the barrel-shaped central portion 15, which allows angular displacement of supporting section 9. Spring clip 19 will also be loaded further in case of angular displacement, so that angular displacement is indeed possible, but without any risk of rattling.

It will be apparent from the foregoing that the invention provides an open roof construction for a vehicle which is remarkable for the manner in which the closing element is supported, wherein manufacturing tolerances are allowed whilst rattling is prevented. The special spring member provides a combination of supporting and locking the pivot pin and spring-loading the closing element, using one part.

The invention is not restricted to the above-described embodiment as shown in the drawing, which can be varied in several ways without departing from the scope of the invention. Thus, the pivoted joint can also be used with other pivot pins of an open roof construction. Furthermore it is possible to mount the pivot pin more or less fixedly to the closing element and with some play to the supporting part. Said play may be in several directions.

## Claims

1. An open roof construction for a vehicle having an opening (2) in its fixed roof (1), which open roof construction comprises a stationary part (3) to be secured to the roof, an adjustable closing element (4) supported by said stationary part, which can be adjusted between a closed position, in which it closes the roof opening, and an open position, in which it releases the roof opening, wherein the closing element is connected to a supporting part (10) via at least one pivot pin (13), **characterized in that** the closing element (4) is mounted on the pivot pin (13) with at least some (lateral) play, and in that a spring member (17) is disposed round said pivot pin for biassing the closing element to a predetermined position with respect to the supporting part (10).

2. An open roof construction according to claim 1, wherein two pivot pins (13) are provided in respective vertical supporting sections (9), under each longitudinal edge of the closing element (4) in the form of a panel.

3. An open roof construction according to claim 2, wherein each supporting part (10) is of dual construction, comprising two walls (12) on either side of each supporting section (9), and wherein the pivot pin (13) is passed through holes (21, 22) in the walls of the supporting part.

4. An open roof construction according to claims 2 and 3, wherein the spring member (17) is configured with a substantially U-shaped spring clip (19), whose limbs (26) are formed with wide holes (24) for allowing the pivot pin (13) to pass, said limbs being bent so as to perform a spring function on the supporting section (9) by tight engagement on the sides of the supporting section.

5. An open roof construction according to claims 3 and 4, wherein the spring member (17) includes a U-shaped mounting part (18), which is present externally of the spring clip (19) and which is connected to the web thereof, whilst the mounting part is fixed to the walls of the supporting part (10).

6. An open roof construction according to claim 5, wherein the mounting part (18) of each spring member (17) is provided with holes (21, 22) for receiving the pivot pin (13) therein, whilst the pivot pin is preferably provided with a head (14) at one end and with a locking groove (16) at the other end, into which groove at least one lip (23) present on the mounting part of the spring member engages for locking the pivot pin in longitudinal direction.

7. An open roof construction according to any one of the preceding claims, wherein the pivot pin (13) is barrel-shaped at least in the central portion (15) thereof.

8. An open roof construction according to any one of the preceding claims, wherein the spring member (17) consists of bent and cut-out sheet metal.

9. An open roof construction for a vehicle having an opening (2) in its fixed roof (1), comprising:
a stationary part (3) to be secured to the roof,
at least one adjustable closing element (4) supported by said stationary part, which can be adjusted between a closed position, in which it closes the roof opening, and an open position, in which it releases the roof opening,
at least one supporting section (9) mounted on the lower side of the closing element,
at least one supporting part (10) for supporting the supporting section of said closing element, said supporting section being connected to said supporting part via at least one pivot pin (13), wherein the supporting section being mounted on the pivot pin (13) with at least some lateral play, and
a spring member (17) disposed round said pivot pin and between the supporting section and the supporting part for biassing the supporting section to a predetermined position with respect to the supporting part (10).

10. An open roof construction for a vehicle having an opening (2) in its fixed roof (1), comprising:
a stationary part (3) to be secured to the roof,
an adjustable closing element (4) supported by said stationary part, which can be adjusted between a closed position, in which it closes the roof opening, and an open position, in which it releases the roof opening,
a supporting section (9) mounted on the lower side of the closing element
a slide shoe (10) for supporting the supporting section of said closing element, said supporting section being connected to said slide shoe via at least one pivot pin (13), wherein the supporting section being mounted on the pivot pin (13) with at least some lateral play, and
a spring member (17) mounted to the slide shoe and biassing the supporting section (19) to a predetermined position with respect to the slideshoe (10),
**characterized in that** the spring member 17 has in a mounting part (18) thereof two aligned holes (21, 22) for holding the pivot pin (13) with respect to the slide shoe, said spring member having an integrated spring clip (19) for directly biassing the supporting section (19) to a predetermined position with respect to the slide shoe (10).
